# EUROPÄISCHE PATENTSCHRIFT

(11) **EP 0 399 253 B1**
(45) Veröffentlichungstag und Bekanntmachung des Hinweises auf die Patenterteilung: **04.08.1993**
(21) Anmeldenummer: 90108292.5
(22) Anmeldetag: 02.05.1990
(51) Int. Cl.: B62D 7/20

(54) **Spurstange für Kraftfahrzeuge**
Track rod for motor vehicles
Barre de timonerie pour véhicules à moteur

(30) Priorität: 17.05.1989 DE 3915991
(43) Veröffentlichungstag der Anmeldung: 28.11.1990
(73) Patentinhaber: LEMFOERDER METALLWAREN AG., D-49441 Lemförde (DE)
(72) Erfinder: Buhl, Reinhard, D-4508 Bohmte (DE); Schäfer, Burkhard, D-2844 Lemförde (DE); Westphal, Paul, D-2995 Stemwede (DE); Kleiner, Wolfgang, D-2841 Wagenfeld (DE); Grube, Volker, D-2840 Diepholz (DE)
(74) Vertreter: Bruse, Willy Hans Heinrich

(56) Entgegenhaltungen:
- DE-C- 882 512
- DE-C- 3 827 854
- FR-A- 2 099 866
- FR-A- 2 508 860
- FR-A- 2 520 456
- GB-A- 1 351 780
- GB-A- 2 050 271
- GB-A- 2 059 006
- US-A- 3 434 369

## Beschreibung

Die Erfindung bezieht sich auf die Ausbildung einer Spurstange für Kraftfahrzeuge mit den Gattungsmerkmalen nach dem Oberbegriff des Patentanspruches 1.

Bekannt ist eine solche Spurstange aus der GB-A-2 050 271. Bei dieser bekannten Ausbildung besteht das Sicherungsglied aus Kunststoff. Es weist an der Innenseite umlaufende Nuten auf, in die vorspringende Wulstringe am Innenteil eingreifen. Die Haltekräfte zwischen dem Innenteil und dem Sicherungsglied sind dabei so definiert, daß bei einer Überschreitung dieser Haltekräfte das Innenteil in dem Sicherungsglied axial verrutscht. Daraus resultiert, daß diese bekannte Spurstange in dem Lastbereich unterhalb des Grenzwertes nicht starr sein kann. Diese Spurstange ist somit bei den heutigen Anforderungen im Automobilbau nicht tragbar.

Die EP-A- 0355 405 (Stand der Technik nach Art. 54(3) EPÜ) offenbart eine Spurstangenausbildung, bei der die Spurstange aus einem Rohr und aus einem in dieses Rohr mit dem einen Ende eingreifenden Stab besteht, der zwischen seiner Halterung in dem Rohr und dem Rohrende eine Sollbruchstelle und zwischen dieser Sollbruchstelle und dem Rohrende einen Absatz aufweist, wobei das Rohr zwischen dem Absatz und dem Rohrende mit einer Verengung versehen ist, die einen Anschlag für den Absatz beim Reißen der Sollbruchstelle bildet. Dadurch kann die Spurstange ihre Länge begrenzt verändern, wodurch das Fahrverhalten des Fahrzeuges nachhaltig verändert wird.

Spurstangen stellen ein für die Sicherheit des Fahrzeuges wesentliches Bauelement dar. Hohen Sicherheitsanforderungen stehen andererseits die Bestrebungen nach einem möglichst geringen Gewicht der Spurstange gegenüber. Bekannt ist die Vorausbestimmung einer gewissen Knickstabilität bei der Übertragung von Druckkräften, so daß die Spurstange oder ein Bauteil der Spurstange bei Überschreitung eines vorbestimmten Druckbelastungswertes ausknickt und dadurch andere, wesentlich teurere Bauteile vor einer Beschädigung schützt. In einem solchen Falle der Ausknickung, zum Beispiel bei Karambolagen mit einem anderen Fahrzeug, mit Verkehrseinrichtungen, Bauwerken oder dergleichen, ist das Kraftfahrzeug nicht mehr benutzbar.

Der Erfindung liegt die Aufgabe zugrunde, eine unter Betriebsbelastungen axial starre Spurstange in der Weise weiterzubilden, daß sowohl eine Drucklastbegrenzung als auch eine Zuglastbegrenzung mit dem gleichen Sicherungsglied vorherbestimmbar ist und bei der dadurch ausgelösten Längenveränderung die in der Spurstange wirksamen Axialkräfte reduziert werden, um dadurch die Möglichkeit zu eröffnen, gegebenenfalls eine eingeschränkte Betriebsfähigkeit des Fahrzeuges aufrechtzuerhalten, wenn die Überlastsicherung wirksam geworden ist.

Die Erfindung löst diese Aufgabe durch eine Ausbildung mit Merkmalen nach dem Patentanspruch 1.

Durch diese Ausbildung des Sicherungsgliedes kann die Höchstbelastung einer unter Betriebsbedingungen axial starren Spurstange sowohl in Zug- als auch in Druckrichtung exakt definiert werden. Bei Überschreitung des vorbestimmten Höchstbelastungswertes erfolgt eine begrenzte Längenänderung der Spurstange, durch die ein erheblicher Teil der Überlastkräfte in Verformungskräfte in den Laschen umgesetzt wird, wobei die Spurstange als Bauteil erhalten bleibt und das Kraftfahrzeug unter mehr oder weniger eingeschränkten, in jedem Falle aber deutlich veränderten Bedingungen benutzbar ist.

Ausführungsbeispiele der Erfindung sind auf der Zeichnung dargestellt. Es zeigen:
- Figur 1: eine Seitenansicht einer Spurstange,
- Figur 2: Belastungsdiagramme:
A einer herkömmlichen Spurstange
B einer erfindungsgemäßen Spurstange,

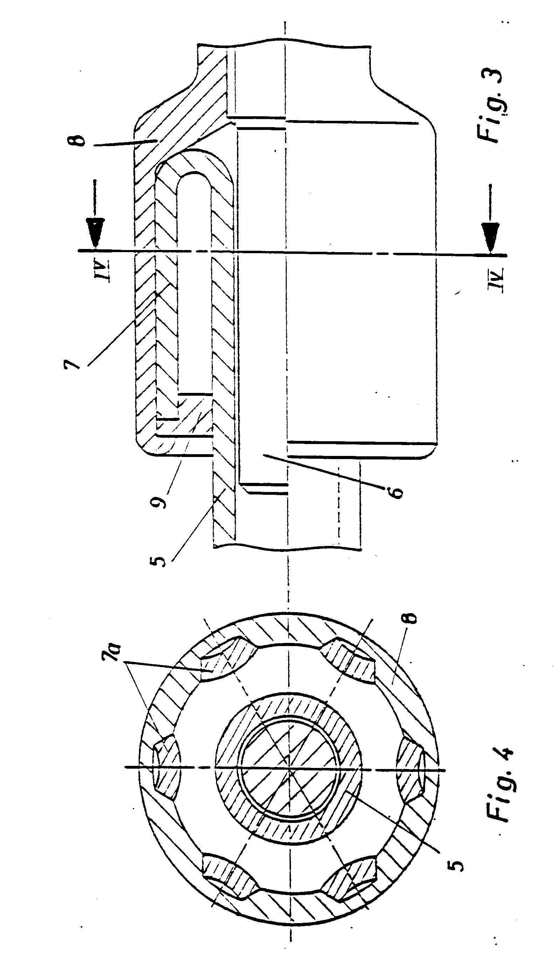

- Figur 3: einen im Maßstab vergrößerten Querschnitt des Sicherungsgliedes nach Figur 1 und
- Figur 4: einen Schnitt nach der Linie IV - IV der Figur 3.

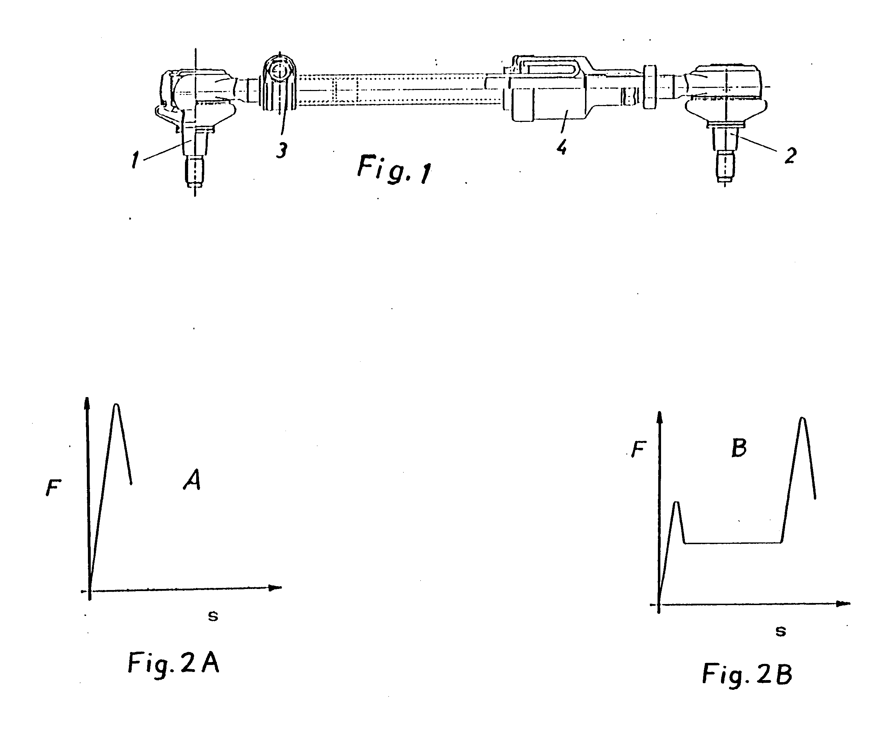

Die Figur 1 zeigt eine Spurstange in einteiliger gerader Ausbildung, deren Enden mittels Kugelgelenke 1 und 2 mit den Lenkhebeln der lenkbaren Räder eines Kraftfahrzeuges verbindbar sind. Die Länge der Spurstange ist durch ineinandergreifende Bauteile stufenlos einstellbar und im Falle des Beispieles mittels einer verschraubbaren Schelle 3 fixierbar. In herkömmlicher Ausbildung wird eine solche Spurstange so ausgelegt, daß sie bei Überschreitung eines vorbestimmten Belastungswertes in Druckrichtung ausknickt, wie es in dem Diagramm A der Figur 2 graphisch wiedergegeben ist.

In einem Teilstück der Spurstange ist ein Sicherungsglied 4 angeordnet, welches aufgrund seiner baulichen Gestaltung bei Überschreitung eines vorbestimmten Belastungswertes in Zugrichtung und vorteilhaft auch in Druckrichtung reagiert. Dieser Belastungswert sollte niedriger sein als der Wert der Bruchbelastung der Bauteile der Spurstange an sich, wie es sich aus einem Vergleich der Belastungsdiagramme A und B ergibt. Dadurch werden die Bauteile der Spurstange durch das Sicherungsglied 4 gegen Überbeanspruchung geschützt.

Dieses Sicherungsglied 4 besteht aus einem rohrförmigen Außenteil 5 und einem in dieses eingreifenden Innenteil 6. Das äußere Ende des Außenteiles 5 ist als Stulpe 7 ausgebildet, bei der durch längsschlitzartige Ausnehmungen zungenförmige Laschen 7a gebildet und mit einer 180-Grad-Biegung zurückgebogen sind. Eine Muffe 8 umschließt die Laschen 7a und ist mit dem einen Ende auf dem Innenteil 6 befestigt, während das andere Ende mit einem Stützring 9 die Laschen 7a miteinander verbindet. Der Ring 9 ist auf dem Außenteil 5 axial gleitend beweglich, so daß das Innenteil 6 mit der Muffe 8 unter Verformung der Laschen 7a axial gegenüber dem Außenteil 5 verschieblich ist, und zwar sowohl in Zugrichtung als auch in Druckrichtung. Der maximale Belastungswert eines solchen in axialer Richtung wirkenden Sicherungsgliedes ist durch den Materialquerschnitt der Laschen, durch die Härte des für diese Laschen verwendeten Werkstoffes und gegebenenfalls auch durch einen Reibsitz des Ringes 9 auf dem Außenumfang des Außenteiles 5 bestimmbar. Bei Überlastung in Zugrichtung wickeln sich die Laschen 7a gegen den Außenumfang des Innenteiles 6 ab, bis sie schließlich in Strecklage gelangen und eine weitere Längenänderung verhindern, so daß eine Begrenzung der Längenänderung erreicht wird. Bei Überlastung in Druckrichtung wickeln sich die Laschen 7a stärker auf, bis sich die Laschen 7 im Biegebereich an der Muffe 8 abstützen und so ebenfalls eine Begrenzung der Längenänderung erreicht wird. Dabei können auch Schaltimpulse ausgelöst werden, die dem Führer des Kraftfahrzeuges das Ansprechen des Sicherungsgliedes und damit die eingetretene beschränkte Benutzbarkeit des Kraftfahrzeuges signalisieren.

## Patentansprüche

1. Spurstange für Kraftfahrzeuge mit einem in Längsrichtung der Spurstange wirksamen Sicherungsglied, welches bei Überschreitung eines definierten, axial wirksamen Belastungswertes in der Länge begrenzt veränderbar ist, wobei das Sicherungsglied einen rohrförmigen Außenteil (5) und einen in diesen koaxial eingreifenden Innenteil (6) aufweist, die beide durch radial gerichtete Formteile (7) ineinandergreifen und die gegenseitige Axialbewegung begrenzen, wobei das Außenteil (5) und das Innenteil (6) gemeinsam die Spurstange bilden und axial formschlüssig miteinander verbunden sind, und wobei die axiale Belastbarkeit dieser axial formschlüssigen Verbindung auf den definierten Belastungswert ausgelegt ist und bei Überschreitung des definierten Belastungswertes die axial formschlüssige Verbindung nachgibt, dadurch gekennzeichnet, daß eine auf dem Innenteil befestigte Muffe (8) das Ende des Innenteils (6) umschließt und in der Muffe die Formteile bildende Laschen (7a) mit dem einen Ende auf dem Außenteil (5) befestigt sind, während das andere Ende der Laschen mit einer 180-Grad-Biegung zurückgebogen ist und sich gegen die Muffe axial abstützt.

## Claims

1. A track rod for motor vehicles with a safety member which is effective in the longitudinal direction of the vehicle and which can be altered to a limited degree in its length when a defined, axially acting loading value is exceeded, the safety member comprising a tubular outer part (5) and an inner part (6) engaging coaxially in the outer part, the two parts engaging in one another by means of radially directed moulded parts (7) and limiting the reciprocal axial movement, the outer part (5) and the inner part (6) together forming the track rod and being connected with one another in an axially positive-locking manner, and the axial loadability of the said axially positive-locking connection being adjusted to the defined loading value and the axially positive-locking connection yielding once the defined loading value is exceeded, characterised in that a sleeve (8) secured to the inner part encloses the end of the inner part (6) and, within the sleeve, the brackets (7a) forming the moulded parts are secured with one end to the outer part (5), whilst the other end of the brackets is bent back with a 180-degree curvature and is supported axially against the sleeve

## Revendications

1. Barre d'accouplement, pour véhicule, comprenant un organe de sécurité qui agit en direction longitudinale de la barre d'accouplement et dont la longueur peut être modifiée d'une manière limitée lorsqu'une valeur de charge définie s'exerçant axialement est franchie vers le haut, cet organe de sécurité comprenant une pièce extérieure (5) tubulaire et une pièce intérieure (6) qui est engagée dans cette dernière d'une manière coaxiale, ces deux pièces s'emboîtant l'une dans l'autre au moyen de parties conformées (7) orientées radialement et limitant le déplacement axial relatif, tandis que la pièce extérieure (5) et la pièce intérieure (6) constituent ensemble la barre d'accouplement et sont réunies entre elles par complémentarité de formes dans le sens axial et que la charge axiale admissible de cette liaison par complémentarité de formes dans le sens axial est fixée à la valeur de charge déterminée, cette liaison par complémentarité de formes dans le sens axial cédant lorsque la valeur déterminée de charge est franchie vers le haut, caractérisée en ce qu'un manchon (8) fixé sur la pièce intérieure (6) entoure l'extrémité de cette pièce intérieure (6) et en ce que, dans le manchon, des pattes (7a) constituant les parties conformées sont fixées par une extrémité à la partie extérieure (5), tandis que l'autre extrémité des pattes est repliée sur elle-même suivant une courbure de 180° et prend appui axialement contre le manchon.
